# EUROPÄISCHE PATENTSCHRIFT

(11) **EP 1 880 130 B1**
(45) Veröffentlichungstag und Bekanntmachung des Hinweises auf die Patenterteilung: **01.10.2008**
(21) Anmeldenummer: 06721209.2
(22) Anmeldetag: 14.04.2006
(51) Int. Cl.: F16J 1/16

(54) **BOLZEN FÜR DREHGELENKE VON KURBELTRIEBEN**
PIN FOR SWIVEL JOINTS ON CRANK MECHANISMS
TOURILLON POUR ARTICULATIONS TOURNANTES DE TRANSMISSIONS A MANIVELLE

(30) Priorität: 20.04.2005 AT 6672005
(43) Veröffentlichungstag der Anmeldung: 23.01.2008
(73) Patentinhaber: ARC Leichtmetallkompetenzzentrum Ranshofen GmbH, 5282 Ranshofen (AT)
(72) Erfinder: MUNDL, Alfred, A-5280 Braunau am Inn (AT); PAPAKYRIACOU, Maria, A-1190 Wien (AT)
(74) Vertreter: Wirnsberger, Gernot
(86) Internationale Anmeldenummer: PCT/AT2006/000151
(87) Internationale Veröffentlichungsnummer: WO 2006/110930

(56) Entgegenhaltungen:
- DE-A- 4 243 023
- GB-B- 2 373 562

## Beschreibung

Die Erfindung betrifft einen Bolzen mit hoher Formstabilität und niedrigem Raumgewicht für Drehgelenke von Kurbeltrieben, gebildet als Verbundteil mit einer äußeren Metallhülse und einem zumindest teilweise aus Metall bestehenden Kern.

Die Kolben und die Pleuelstange in Kurbeltrieben, insbesondere in Otto- und Dieselmotoren, sind mittels eines Kolbenbolzens drehbar miteinander verbunden. Dieser Kolbenbolzen überträgt die Zünddruck-, Kompressions- und Massekräfte vom Kolben auf die Pleuelstange, welche mit einer Kurbelwelle in Wirkverbindung steht.

Der Kolbenbolzen ist in eine durchgehende Bohrung im Kolben und in der Pleuelstange eingesetzt und im Kolben und/oder im Pleuel drehbar gelagert. Gegen eine axiale Verschiebung des Bolzens im Kolben sind Sicherungsmittel vorgesehen.

Die Kräfte, die auf einen Kolbenbolzen wirken, verformen diesen und führen einerseits zu einer Durchbiegung bzw. Krümmung der Bolzenachse und andererseits zu einer Ovalisierung des Bolzenquerschnittes mit einer Scherbeanspruchung. Diese Verformungen, insbesondere eine Ovalisierung, sollen möglichst gering sein, um hohe Standzeiten des Kurbeltriebes zu erreichen.

Kolbenbolzen aus Stahl weisen zwar die geringsten Durchbiegungen auf, besitzen jedoch eine hohe Masse, welche insbesondere bei rasch laufenden Kurbeltrieben bzw. Motoren nachteilig wirksam ist.

Es ist bekannt, zur Verminderung der Masse hohle, also rohrförmige, Kolbenbolzen einzusetzen und diese mit oder aus faserverstärktem Kunststoff auszuformen (EP-A-0 035 628; DE-C-29 52 117; DE-A-34 14 259; DE-C-36 10 133; DE-C-30 09 424). Diese Kolbenbolzen weisen wesentlich geringere Massen auf, erfahren jedoch im Betrieb größere Ovalisierung und Durchbiegungen als jene aus Stahl.

Es wurde schon versucht (US-1 670 564), Kolbenbolzen, bestehend aus einem Stahlrohr und einem Kern aus Aluminium herzustellen und einzusetzen.

Gemäß GB-B-2 373 562 ist vorgeschlagen worden, Kolbenbolzen in Kurbelmaschinen aus einem Kern mit einer Oberflächenschicht zu bilden, wobei der Kern aus einem mit Keramik verstärkten Metall und die Außenschicht aus einem aufgeschmolzenen, härteren Metall besteht. Bei Verwendung von Keramikpulver sind Stahllegierungen als Matrixwerkstoff bevorzugt, hingegen ist bei Keramik-Fasern und Geweben eine Infiltration von Aluminium zur Ausformung des Kernes vorgesehen.

Nach einem Vorschlag gemäß DE-A-42 43 023 setzt sich ein Hybrid-Kolbenbolzen für eine Hubkolben-Brennkraftmaschine aus einem Stützkern und einer äußeren, dünnwandigen Hülse zusammen. Der Stützkern besteht dabei aus einer Aluminium-Magnesium-Legierung oder aus Kunststoff, die bzw. der als Matrixmaterial in eine in sich isotrope, dreidimensional regellos ausgerichtete, keramisierte Stützstruktur aus Al₂O₃ infiltriert ist. Die Stützstruktur mit einer Vielzahl dazwischen liegender Poren und Hohlräume ist als Körper besonders aufgebaut und weist dreidimensional verlaufende Stege auf.

Alle bekannten Kolbenbolzen mit gegenüber Stahl wesentlich verringerter Masse haben meist jedoch den Nachteil, dass diese in modernen Hochleistungsmotoren eine ungünstig große Durchbiegung und/oder eine dgl. Ovalverformung im schweren Betrieb aufweisen und somit die Einsatzdauer einer Hubkolben-Brennkraftmaschine, insbesondere bei öfterem Kaltstart, beschränken können.

Hier will die Erfindung die Nachteile im Stand der Technik beseitigen und setzt sich zum Ziel, einen gattungsgemäßen Bolzen für Drehgelenke von Kurbeltrieben zu schaffen, der auch in unterschiedlichen Temperaturbereichen und nach oftmaliger Erwärmung auf Betriebstemperatur hohe Festigkeit und Steifigkeit gegenüber einer Ovalverformung und gegenüber Biegung besitzt und geringe Masse aufweist.

Dieses Ziel wird bei einem Bolzen der eingangs genannten Art dadurch erreicht, dass die Metallhülse aus einer Legierung mit Schwermetallen und der Kern zumindest teilweise aus einem Matrix-Metall-Verbundwerkstoff (MMC) mit einem Elastizitätsmodul von größer 150 kN/mm², in welchem die Metallkomponente ein Leichtmetall oder eine Leichtmetall-Legierung ist, besteht und die Teile miteinander nicht lösbar verbunden sind.

Die mit der Erfindung erreichten Vorteile sind im Wesentlichen darin zu sehen, dass der die Gleitlagerfläche beinhaltende Hülsenteil des Kolbenbolzens aus einer bewährten Schwermetall-Legierung, insbesondere aus legiertem Stahl mit diesem eigenen physikalischen Eigenschaften, besteht und der Kern zumindest teilweise aus einem Matrix-Metall-Verbundwerkstoff (MMC) gebildet ist, welcher MMC zur Stützung der Hülse bzw. zur Erhöhung der Steifigkeit und Festigkeitseigenschaften des Bolzens erfindungsgemäß einen hohen Elastizitätsmodul aufweist. Weil nun zur Verminderung der Masse des Kernes für das Matrixmetall ein Leichtmetall vorgesehen ist, die Metalle Aluminium und Magnesium sowie deren Legierungen jedoch einen Elastizitätsmodul von 40 bis 75 kN/mm² besitzen, sind nach der Erfindung in der Metallmatrix Partikeln eingelagert, durch welche der Elastizitätsmodul des MMC auf einen Wert von größer 130 kN/mm² erhöht wird. Derart kann erreicht werden, dass insbesondere eine Ovalisierung und eine Durchbiegung des Hybridbolzens bei hoher Belastung wesentlich vermindert werden, wobei eine Gewichtsreduktion im Vergleich mit rohrförmigen Bolzen aus Stahl von 15% bis 30% erreicht werden kann.

Um eine Verformung des Bolzens weiters zu verringern, kann vorgesehen sein, dass der Unterschied der Elastizitätsmodule von Hülsenwerkstoff und MMC-Kernwerkstoff weniger als 90 kN/mm², in günstiger Weise weniger als 60 kN/mn², vorzugsweise weniger als 30 kN/mm², insbesondere weniger als 15 kN/mm² beträgt. Derart erweist sich die Stützwirkung des Kernes als erhöht, wodurch der Bolzen auch bei gelegentlicher Überlast der Maschine im Pleuellager keine nachteiligen Veränderungen bzw. Verschleißerscheinungen im Langzeitbetrieb hervorruft.

Brennkraftmaschinen arbeiten bekanntermaßen bei erhöhter Temperatur, einer aus Funktions- und Wirtschaftsgründen festgelegten Betriebstemperatur.

Nach längerfristigem Stillstand werden bei und nach einer Inbetriebnahme der Maschinen die Kolbenbolzen auf eine Arbeitstemperatur von 180°C bis 220°C und höher gebracht, wobei vielfach schon nach dem sogenannten Kaltstart hohe Bolzenbelastungen vorliegen. In Konsequenz dazu bzw. von verschiedenen Betriebsarten des Motors, sollen die mechanischen Eigenschaften der jeweiligen Bolzen im gesamten möglichen Temperaturbereich gleich sein und von einem Temperaturwechsel unbeeinflusst bleiben.

Um also die Stützfunktion des Kernes gegenüber der Metallhülse des Bolzens und somit dessen Formstabilität in einem weiten Temperaturbereich gleichartig sicherzustellen, ist weiters nach der Erfindung vorgesehen, dass der Wärmeausdehnungskoeffizient des Kernes bzw. des MMC-Werkstoffes derart eingestellt ist, dass dieser dem Ausdehnungskoeffizienten des Metallhülsenwerkstoffes im Wesentlichen entspricht oder übersteigt.

In günstiger Weise kann vorgesehen sein, dass der Wärmeausdehnungskoeffizient des Kernes bzw. des MMC-Werkstoffes jenen der Metallhülse derart übersteigt, dass bei Betriebstemperatur die Verformung von Hülse und Kern im elastischen Bereich sind.

Mit besonderem Vorteil kann eine hohe Güte und eine wirtschaftliche Fertigung von Hybridbolzen nach der Erfindung erreicht werden, wenn der MMC-Kemwerkstoff durch Druckinfiltration einer Schmelze aus einem Leichtmetall oder einer Leichtmetall-Legierung, insbesondere aus einer hochfesten Aluminiumlegierung zwischen. Verstärkungspartikeln, insbesondere Oxid(e) und/oder Karbid(e) und/oder Nitrid(e) von Leichtmetallen oder mittels Squeeze - Casting - Verfahrens hergestellt ist.

Für eine Einstellung der mechanischen und der wärmetechnischen Eigenschaften des MMC-Kernes kann es günstig sein, wenn die Partikeln eine blockförmige oder sphärische Struktur mit einem Durchmesser von 2 µm bis 150 µm, vorzugsweise von 5 µm bis 60 µm, insbesondere von 8 µm bis 30 µm, aufweisen. Bei einer homogenen Verteilung der Partikeln im Matrixmetall ist eine unerwartet strenge Abhängigkeit des E-Moduls und des Wärmeausdehnungskoeffizienten vom Partikelgehalt erreichbar und folglich können die mechanischen Eigenschaften und die Dehnwerte des Kernes einfach auf gewünschte Werte eingestellt werden.

Die Steifigkeit und der Widerstand gegen Ovalverformung und somit die Güte des Bolzens können bzw. kann weiter verbessert werden, wenn das Matrixmetall des Verbundwerkstoffes eine durch eine Wärmebehandlung erhöhte Festigkeit besitzt.

Es kann in günstiger Weise auch im Hinblick auf eine weitere Verminderung des Gewichtes des Bolzens vorgesehen sein, dass der MMC-Kern zumindest teilweise aus einer MMC-Hülse gebildet ist.

Das Problem einer den thermischen Belastungen in einem schweren Betrieb einer Kolbenmaschine entsprechenden Fixierung zwischen den Bolzenteilen kann mit Vorteil überwunden werden, wenn die unlösbare Verbindung zwischen MMC-Kern und Hülse durch thermisches Fügen gebildet ist. Diese Verbindungstechnik erwies sich bei den erfindungsgemäßen mechanischen und thermischen Werkstoffwerten des MMC-Material als besonders gut.

In einer unterschiedlichen Ausführungsform der Fixierung der Teile kann auch erfindungsgemäß vorgesehen sein, dass der Bolzen durch Einpressen eines MMC-Kernes in eine Hülse mit einem zumindest teilweise konisch geformten Hohl gebildet ist.

Nach einer weiteren Ausgestaltungsform eines erfindungsgemäßen Bolzens kann die unlösbare Verbindung zwischen MMC-Kern und Hülse mit einer beidseitigen konischen Erweiterung der Hülse gebildet sein, wobei ein quasi Formschluss der Teile erreicht wird.

Im Folgenden wird die Erfindung anhand von lediglich einen Ausführungsweg darstellenden, schematischen Zeichnungen und dgl. Diagrammen näher erläutert. Es zeigt
- Fig. 1: einen thermisch gefügten Bolzen
- Fig. 2: eine an den Enden erweiterte Hülse
- Fig. 3: einen Bolzenkern
- Fig. 4: ein Diagramm: E-Modul in Abhängigkeit vom Partikelanteil
- Fig. 5: ein Diagramm: thermischer Längenausdehnungskoeffizient in Abhängigkeit vom Partikelanteil
- Fig. 6a: einen Versuchsbolzen
- Fig. 6b: einen Vergleichsbolzen
- Fig. 7: ein Diagramm: Ovalverformung in Abhängigkeit vom Zünddruck

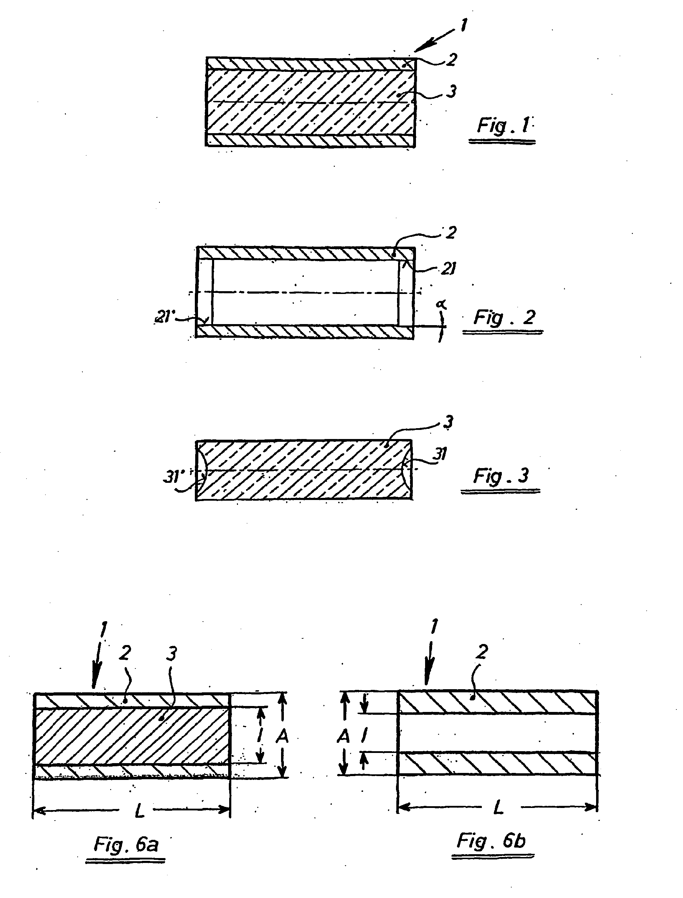

In Fig. 1 ist ein Bolzen 1 nach der Erfindung, gebildet mit einer Hülse 2 aus einem Vergütungsstahl und einem Kern 3 aus einem Metall-Matrix-Verbundwerkstoff (MMC), bestehend aus einer Leichtmetall-Matrix-Legierung mit einem Keramikpulver, dargestellt. Eine nicht lösbare Verbindung von Hülse 2 und Kern 3 erfolgte durch ein thermisches Fügen, bei welchem ein Außenteil 2 auf hohe Temperatur erwärmt und/oder ein Innenteil 3 auf niedrige Temperatur gekühlt werden, worauf ein Übereinanderpositionieren und ein Temperaturausgleich der Teile erfolgen.

Bei einer Herstellung eines erfindungsgemäßen Bolzens 1 mit einem Kern 3 aus einer hochfesten Leichtmetall-Legierung, zum Beispiel einer Aluminiumlegierung, als Metall-Matrix, kann vorerst der Kern 3 vor einem thermischen Fügen lösungsgeglüht und darauffolgend abgeschreckt werden. Ein Aushärten vom Kernmaterial kann im Fügeverbund durch ein Erwärmten und Halten auf Ausscheidungstemperatur erfolgen.

In Fig. 2 ist eine Schwermetall-Hülse 2, beispielsweise aus einer thermisch vergüteten Stahllegierung 15Cr3, 16MnCr5, 15CrNi6, 31CrMoV9, 34CrAl16 oder dgl. gezeigt, bei welcher innen beidseitig eine konische Erweiterung 21,21' vorliegt.

Ein Kern 3, wie beispielsweise mit stirnseitigen Kalotten 31,31' in Fig. 3 gezeigt, wird in eine Hülse 2 mit beidseitiger, konischer Erweiterung 21,21' eingepresst, wobei in Folge einer plastischen Aufweitung im Kernendenbereich ein quasi Formschluss entsteht.

Als Matrix-Metall kann Aluminium oder die Legierungen A201, A206, A357, A7020, A7075 und dgl. sowie Magnesium oder die Legierungen AJ62, AZ91, AZ31 und dgl. verwendet werden.

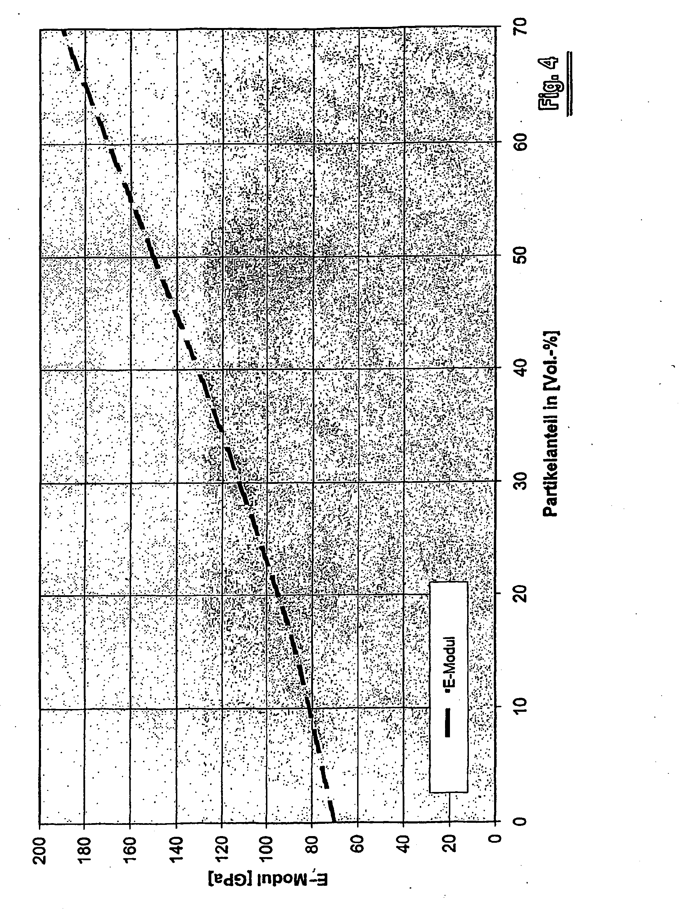

In Fig. 4 ist für einen MMC-Werkstoff der ermittelte E-Modul in Abhängigkeit vom Partikelanteil in einem Leichtmetall, im gegebenen Fall einer Aluminiumlegierung, dargestellt. Von einem rein metallischen Zustand, bei welchem der E-Modul zwischen 60 und 80 kN/mm² liegt, erfolgt durch Zusatz von Keramikpartikeln bei homogener Verteilung derselben im Matrixmetall eine kontinuierliche Erhöhung des E-Modul-Wertes, welcher bei einem Partikelanteil von ca. 60 Vol.-% zwischen 160 und 180 GPa beträgt, also schon den Bereich der Werte von Stählen überschneidet. Die Art der Karbide wie SiC, TiC und dgl., der Oxide wie Al₂O₃, MgO und dgl., der Nitride sowie der Mischformen und die Größe bzw. der Durchmesser dieser Keramikteilchen beeinflussen naturgemäß das Ausmaß der Eigenschaftsänderungen des MMC-Werkstoffes in Abhängigkeit vom Partikelanteil. Auch das Matrixmetall wie Aluminium, Magnesium, Titan und Legierungen dieser Metalle besitzen jeweils Rückwirkungen auf das mechanische Eigenschaftsprofil von MMC.

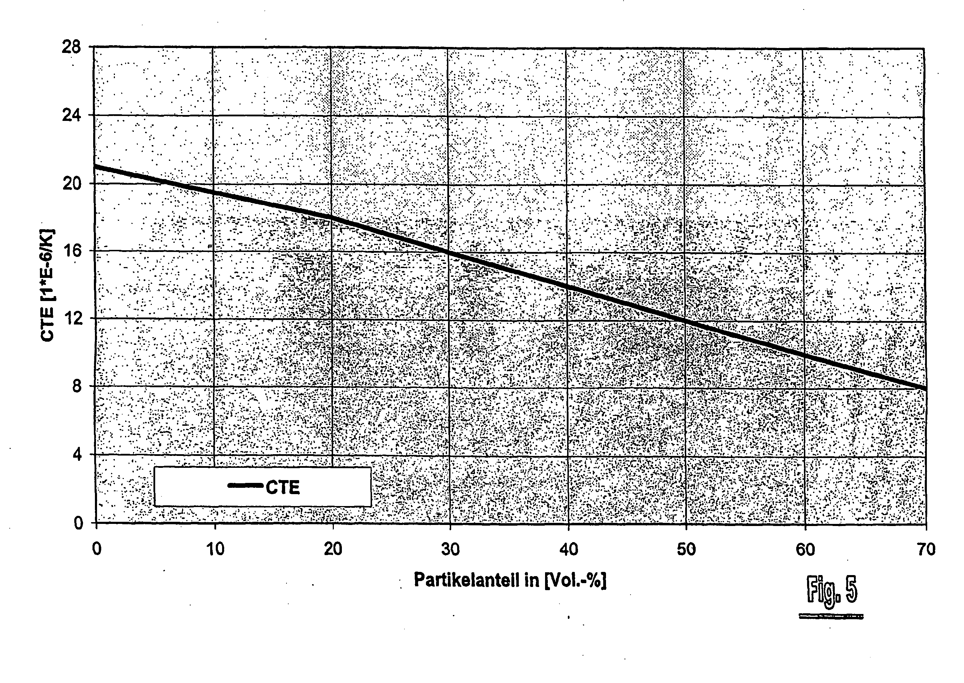

Fig. 5 zeigt den Verlauf des thermischen Ausdehnungskoeffizienten (CTE) eines MMC-Werkstoffes in Abhängigkeit vom Partikelanteil. Ausgehend von einem Ausdehnungskoeffizienten einer reinen Aluminiumlegierung mit einem Wert von 18 bis 24 x 10⁻⁶/K sinkt dieser kontinuierlich auf 8 bis 12 x 10⁻⁶/K bei einem Partikelanteil von 60 Vol.-% und überlappt jenen Bereich von Stahllegierungen für Hülsenwerkstoffe.

Fig. 6a zeigt einen erfindungsgemäßen Hybridbolzen 1 mit einer Länge L von 68 mm, wobei eine Schwermetallhülse bzw. Stahllegierungshülse 2 einen Außendurchmesser A von 30,0 mm und einen Innendurchmesser I von 24,0 mm besitzt. Ein MMC-Kern 3 ist mit der Hülse 2 nicht lösbar verbunden bzw. thermisch gefügt und weist zwangsläufig einen Außendurchmesser entsprechend der Rohrinnenabmessung I auf. Das Hülsengewicht beträgt 136 g, das Gewicht des MMG-Kernes 87 g, woraus ein gesamtes Bolzengewicht von 223 g resultiert.

Ein vergleichend erprobter, in Fig. 6b dargestellter, Stahlbolzen 1 einer Serie weist ebenfalls eine Länge L von 68 mm und einen Außendurchmesser A von 30,0 mm auf, besitzt jedoch einen Innendurchmesser I von 14,5 mm, woraus sich ein Gewicht eines Vergleichsbolzens von 290 g ergibt.

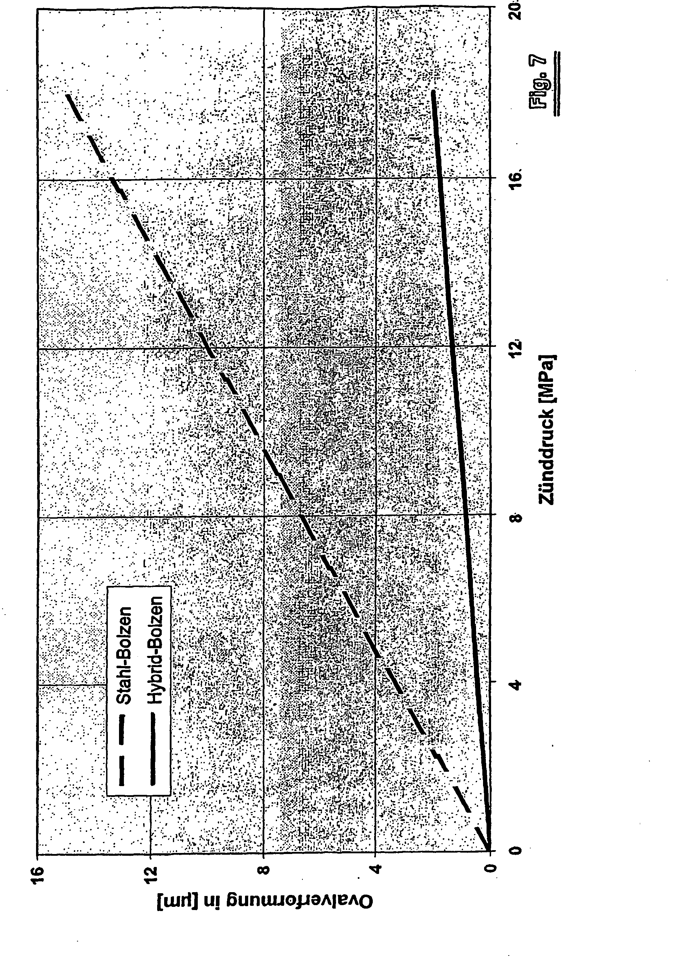

Rechnerisch und insbesondere durch praktische Versuche und Messungen wurden in Abhängigkeit vom Zünddruck eine Ovalverformung der Bolzen ermittelt. Die Mittelwerte der Ergebnisse sind in Tabelle 1 aufgelistet und in Fig. 7 als Diagramm dargestellt.

**Tabelle 1**

| Zünddruck MPa | Ovalverformung [µm] |
|---|---|
| | erfindungsgemäßer Hybridbolzen (Fig. 6a) |
| 4 | 0,46 |
| 8 | 0,92 |
| 12 | 1,61 |
| 16 | 1,89 |
| 18 | 2,12 |

In Fig. 7 ist die jeweilige Ovalverformung von Stahl bolzen gemäß Fig. 6b und von erfindungsgemäßen Hybridbolzen nach Fig. 6a in Abhängigkeit von Zünddruck gezeigt.

Ein Hybridbolzen weist gegenüber einem Rohrbolzen aus Stahl mit gleichen Außenabmessungen und gleicher Funktion in einem Motor ein um 67 g bzw. 23% geringeres Gewicht auf und erfährt bei gleicher Belastung bzw. gleichem Zünddruck eine Ovalverformung von weniger als 1/6 des Stahlbolzens.

## Patentansprüche

1. Bolzen (1) mit hoher Formstabilität und niedrigem Raumgewicht für Drehgelenke von Kurbeltrieben, gebildet als Verbundteil mit einer äußeren Metallhülse (2) und einem zumindest teilweise aus Metall bestehenden Kern (3), **dadurch gekennzeichnet, dass** die Metallhülse (2) aus einer Legierung mit Schwermetallen und der Kern (3) zumindest teilweise aus einem Matrix-Metall-Verbundwerkstoff (MMC) mit einem Elastizitätsmodul von größer 130 kN/mm², vorzugsweise 150 kN/mm², in welchem die Metallkomponente ein Leichtmetall oder eine Leichtmetall-Legierung ist, besteht und die Teile miteinander nicht lösbar verbunden sind.

2. Bolzen (1) nach Anspruch 1, **dadurch gekennzeichnet, dass** der Unterschied der Elastizitätsmodule von Hülsenwerkstoff und MMC-Kemwerkstoff weniger als 90 kN/mm². in günstiger Weise weniger als 60 kN/mm², vorzugsweise weniger als 30 kN/mm², insbesondere weniger als 15 kN/mm² beträgt.

3. Bolzen (1) nach Anspruch 2, **dadurch gekennzeichnet, dass** der Wärmeausdehnungskoeffizient des Kernes (3) bzw. des MMC-Werkstoffes derart eingestellt ist, dass dieser dem Ausdehnungskoeffizienten des Metallhülsenwerkstoffes entspricht oder übersteigt.

4. Bolzen (1) nach einem der Ansprüche 1 bis 3, **dadurch gekennzeichnet, dass** der Wärmeausdehnungskoeffizient des Kernes (3) bzw. des MMC-Werkstoffes jenen der Metallhülse (2) derart übersteigt, dass bei Betriebstemperatur die Verformung von Hülse (2) und Kern (3) im elastischen Bereich sind.

5. Bolzen (1) nach einem der Ansprüche 1 bis 4, **dadurch gekennzeichnet, dass** der MMC-Kemwerkstoff durch Druckinfiltration einer Schmelze aus einem Leichtmetall oder einer Leichtmetall-Legierung, insbesondere aus einer hochfesten Aluminiumlegierung zwischen Verstärkungspartikeln, insbesondere Oxid(e) und/oder Karbid(e) und/oder Nitrid(e) von Leichtmetallen oder mittels Squeeze - Casting - Verfahrens hergestellt ist.

6. Bolzen (1) nach einem der Ansprüche 1 bis 5, **dadurch gekennzeichnet, dass** die Partikeln eine blockförmige oder sphärische Struktur mit einem Durchmesser von 2 µm bis 150 µm, vorzugsweise von 5 µm bis 60 µm, insbesondere von 8 µm bis 30 µm aufweisen.

7. Bolzen (1) nach einem der Ansprüche 1 bis 6, **dadurch gekennzeichnet, dass** das Matrixmetall des Verbundwerkstoffes eine durch eine Wärmebehandlung erhöhte Festigkeit besitzt.

8. Bolzen (1) nach einem der Ansprüche 1 bis 7, **dadurch gekennzeichnet, dass** der MMC-Kern (3) zumindest teilweise aus einer MMC-Hülse gebildet ist.

9. Bolzen (1) nach einem der Ansprüche 1 bis 8, **dadurch gekennzeichnet, dass** die unlösbare Verbindung zwischen MMC-Kern (3) und Hülse (2) durch thermisches Fügen gebildet ist.

10. Bolzen (1) nach einem der Ansprüche 1 bis 8, **dadurch gekennzeichnet, dass** der Bolzen durch Einpressen eines MMC-Kernes (3) in eine Hülse (2) mit einem zumindest teilweise konisch geformten Hohl gebildet ist.

11. Bolzen (1) nach einem der Ansprüche 1 bis 8, **dadurch gekennzeichnet, dass** die unlösbare Verbindung zwischen MMC-Kern (3) und Hülse (2) mit einer beidseitigen konischen Erweiterung der Hülse (2) gebildet ist.

## Claims

1. A pin (1) with high form stability and low density for swivel joints of crank mechanisms, formed as a composite comprising an outer metal sleeve (2) and a core (3), which is at least partially made from metal, **characterized in that** the metal sleeve (2) is made from an alloy comprising heavy metals and **in that** the core (3) is at least partially made from a matrix-metal composite material (MMC) comprising a modulus of elasticity of greater than 130 kN/mm², preferably 150 kN/mm², in which the metal component is a light metal or light metal alloy and **in that** the parts are connected to one another so as not to be capable of being detached.

2. The pin (1) according to claim 1, **characterized in that** the difference of the moduli of elasticity of sleeve material and MMC core material is less than 90 kN/mm², advantageously less than 60 kN/mm², preferably less than 30 kN/mm², in particular less than 15 kN/mm².

3. The pin (1) according to claim 2, **characterized in that** the heat expansion coefficient of the core (3) and of the MMC material, respectively, is set in such a manner that it corresponds to or exceeds the expansion coefficient of the metal sleeve material.

4. The pin (1) according to one of claims 1 to 3, **characterized in that** the heat expansion coefficient of the core (3) and of the MMC material, respectively, exceeds the heat expansion coefficient of the metal sleeve (2) in such a manner that, under operating temperature, the deformation of sleeve (2) and core (3) are in the elastic range.

5. The pin (1) according to one of claims 1 to 4, **characterized in that** the MMC core material is produced by means of pressure infiltration of a melt made from a light metal or a light metal alloy, in particular from a high-strength aluminum alloy between reinforcement particles, in particular oxide(s) and/or carbide(s) and/or nitride(s) of light metals or by means of a squeeze-casting method.

6. The pin (1) according to one of claims 1 to 5, **characterized in that** the particles encompass a block-shaped or spherical structure with a diameter of 2 µm to 150 µm, preferably of 5 µm to 60 µm, in particular of 8 µm to 30 µm.

7. The pin (1) according to one of claims 1 to 6, **characterized in that** the matrix metal of the composite material has a stability, which is increased by means of a heat treatment.

8. The pin (1) according to one of claims 1 to 7, **characterized in that** the MMC core (3) is at least partially formed from an MMC sleeve.

9. The pin (1) according to one of claims 1 to 8, **characterized in that** the non-detachable connection between MMC core (3) and sleeve (2) is formed by means of thermal joining.

10. The pin (1) according to one of claims 1 to 8, **characterized in that** the pin is formed by means of pressing an MMC core (3) into a sleeve (2) comprising a concave, which is formed so as to be at least partially conical.

11. The pin (1) according to one of claims 1 to 8, **characterized in that** the non-detachable connection between MMC core (3) and sleeve (2) is formed by means of a bilateral conical expansion of the sleeve (2).

## Revendications

1. Boulon (1) avec une grande stabilité de forme et un faible poids spécifique pour des articulations tournantes de transmissions à bielle, conçu comme une pièce composite avec une douille métallique extérieure (2) et un noyau solide (3) au moins partiellement en métal, **caractérisé en ce que** la douille métallique (2) est en un alliage avec des métaux lourds et le noyau (3) est au moins partiellement en une matière composite à matrice métallique (MMC) avec un module d'élasticité supérieur à 130 kN/mm², de préférence à 150 kN/mm², dans laquelle le composant métallique est un métal léger ou un alliage de métal léger, et les pièces sont reliées entre elles de façon non amovible.

2. Boulon (1) selon la revendication 1, **caractérisé en ce que** la différence entre les modules d'élasticité de la matière de la douille et de la matière MMC du noyau est inférieure à 90 kN/mm², de façon avantageuse inférieure à 60 kN/mm², de préférence inférieure à 30 kN/mm², notamment inférieure à 15 kN/mm².

3. Boulon (1) selon la revendication 2, **caractérisé en ce que** le coefficient de dilatation thermique du noyau (3) ou de la matière MMC est réglé de sorte à correspondre ou à dépasser le coefficient de dilatation de la matière de la douille métallique.

4. Boulon (1) selon l'une quelconque des revendications 1 à 3, **caractérisé en ce que** le coefficient de dilatation thermique du noyau (3), respectivement de la matière MMC dépasse celui de la douille métallique (2), de sorte qu'à la température de service, la déformation de la douille (2) et du noyau (3) se situe dans la plage élastique.

5. Boulon (1) selon l'une quelconque des revendications 1 à 4, **caractérisé en ce que** la matière MMC du noyau est fabriquée par infiltration sous pression d'une masse en fusion en un métal léger ou en un alliage de métal léger, notamment en un alliage d'aluminium à résistance élevée entre des particules de renfort, notamment un (des) oxyde(s) et ou un (des) carbure(s)et ou un (des) nitrures de métaux légers ou au moyen d'un procédé de forgeage par liquide.

6. Boulon selon l'une quelconque des revendications 1 à 5, **caractérisé en ce que** les particules ont une structure en forme de bloc ou de sphère avec un diamètre de 2 µm à 150 µm, de préférence de 5 µm à 60 µm, notamment de 8 µm à 30 µm.

7. Boulon (1) selon l'une quelconque des revendications 1 à 6, **caractérisé en ce que** le métal de la matrice de la matière composite présente une solidité accrue par traitement thermique.

8. Boulon (1) selon l'une quelconque des revendications 1 à 7, **caractérisé en ce que** le noyau en MMC (3) est au moins formé en partie par une douille en MMC.

9. Boulon (1) selon l'une quelconque des revendications 1 à 8, **caractérisé en ce que** la liaison non amovible entre le noyau en MMC (3) et la douille (2) est formée par assemblage thermique.

10. Boulon (1) selon l'une quelconque des revendications 1 à 8, **caractérisé en ce que** boulon est formé par enfoncement d'un noyau en MMC (3) dans une douille (2) avec un creux façonné au moins partiellement sous forme conique.

11. Boulon (1) selon l'une quelconque des revendications 1 à 8, **caractérisé en ce que** la liaison non amovible entre le noyau en MMC (3) et la douille (2) est formée par un évasement bilatéral conique de la douille (2).
